# EUROPEAN PATENT APPLICATION

(11) **EP 3 065 059 A1**
(43) Date of publication of application: **07.09.2016**
(21) Application number: 15158034.7
(22) Date of filing: 06.03.2015
(51) Int. Cl.: G06F 13/40, G06F 13/42, H01R 13/00, G06F 21/12

(54) **USB device with connector having integrated flash memory card slot**

(71) Applicant: SafeNet Data Security (Israel) Ltd., 49511 Petach Tikva (IL)
(72) Inventor: Sharon, Ronen, 49511 PETACH TIKVA (IL); Varmaz, Mike, 49511 PETACH TIKVA (IL)
(74) Representative: Scheer, Luc

(57) **Abstract**

The present invention relates to a universal serial bus (USB) device (1) comprising:
- a flash memory card read/write module (FMR);
- a functional module (FuM);
- a USB connector (11) through which the flash memory card read/write module (FMR) and/or the functional module (FuM) is in data communication with an external electronic device (EXT) connected thereto, said USB connector (11) having a conductive shell (110) and a thinned contact support plate (12) to arrange a flash memory card slot inside the conductive shell (110) for holding a flash memory card (2) in connection with the flash memory card read/write module (FMR), said flash memory card read/write module (FMR) and said functional module (FuM) being further arranged for the functional module (FuM) to communicate with a flash memory card (2) inserted in the flash memory card slot.

## Description

### FIELD OF THE INVENTION

The present invention relates to a universal serial bus (USB) device comprising:
- a flash memory card read/write module;
- a functional module;
- a USB connector through which the flash memory card read/write module and/or the functional module is in data communication with an external electronic device connected thereto.

### BACKGROUND OF THE INVENTION

In order to avoid illegal copying or reverse engineering, software is often utilizing software protection devices (dongles). To do a strong binding to the software, these software protection devices provide cryptography and even virtual machines to run small parts of the software inside the protected environment of the dongle.

Typically, the software protection devices lack memory as they provide data memory in the kB order of magnitude.

Besides, some flash memory card read/write module, also designated as reader, as MicroSD card readers, are designed with the card slot as part of the USB connector: Standard A type, male connector / plug. Normally this part occupies the same space used for the contact support plate which is the plastic part inside the standardized USB connector. The card can be ejected either using a lever or by freely pulling it using a fingernail. A lever adds to the cost of the connector, while free pulling brings the risk of the card not staying firmly inserted. These issues bring the need for a simple yet reliable alternative design. Furthermore it is here noted that these known readers only have read/write functions and are only intended to render possible the use of a flash memory card while only a USB plug is available.

Further alternative and advantageous solutions would, accordingly, be desirable in the art.

### SUMMARY OF THE INVENTION

The present invention aims at providing a USB device able to support an additional flash memory card in a mechanically stable way while being able to provide reliable and customized software protection features.

The present invention is defined, in its broadest sense, as a USB device wherein said USB connector has a conductive shell and a thinned contact support plate to arrange a flash memory card slot inside the conductive shell for holding a flash memory card in connection with the flash memory card read/write module, said flash memory card read/write module and said functional module being further arranged for the functional module to communicate with a flash memory card inserted in the flash memory card slot.

The invention enables to insert a flash memory card directly inside the connector while enabling direct communication between the flash memory card and a functional module which will use the flash memory. The result is very compact. The invention combines an SD card reader into a dongle and takes advantage in combining a SD card reader with a software protection device in a particularly advantageous application.

Besides, fraudulent manipulations on the flash memory are limited as, once the USB device or dongle is inserted in a USB plug, the card is not anymore accessible. So, while the functional module communicates with the card read/write module when a card is inserted, the risk of fraudulent actions is reduced. The invention thus enables to extend the protected environment of a USB dongle to any flash memory card compatible with an insertion in a card slot as defined in a connector according to the invention.

Also, with the invention, the flash memory card extends the memory of the USB device. It is easily customizable by existing infrastructure for SD-cards and also the size of the memory can be easily changed by simply exchanging the card. Even extensions of the software or data can be delivered by sending out a new SD card, with no need of exchanging the whole dongle.

According to an advantageous application of the invention, said functional module stores a software protection software having instructions dedicated to said flash memory card read/write module to use a flash memory card held in the flash memory card slot.

The invention is indeed particularly interesting in the case where the dongle is a software protection dongle. Indeed, such software have frequent update and changing the dongle each time there is an update would be a costly and heavy process. The invention enables to change only the flash memory card for the whole software protection functions or for a part of them.

It has to be noted that the slot takes here the place of a normal contact support plate. The seam that attaches the wrapped metal connector is normally placed as the top. This is not an issue when the contact support Plate is full, but when it is thinned to allow room for a card slot, there is increased risk that pressure, e.g. by a finger, on the top wall of the connector would cause it to collapse.

According to an embodiment of the invention, the conductive shell of said USB connector is a metal shell and has a lateral seam.

Such an embodiment ensures that the top wall is much more rigid. An increased durability compared to top-seam design is thus obtained.

According to a particular embodiment, said conductive shell has further a cutout arranged at the top side of the flash memory card slot.

Such a cutout enables a user to put his/her finger or fingernail on the flash memory card to extract it from the slot. It thus allows the user to pull the card out using a fingernail. Production costs are reduced compared to lever-based card ejection design. However, in the free pull case, it occurs that the card cannot stay firmly inserted in the slot.

According to a specific embodiment, the conductive shell further has a punch at the top side of the flash memory card slot.

The use of a punch on the top side of the flash memory card slot allows achieving optimal friction so that the card cannot fall out yet is easy to insert and pull out intentionally. An increased reliability and ease of use is reached compared to other free-pull designs where optimal friction is hard to achieve.

In a preferred implementation, said flash memory card is a microSD card.

This format of flash memory cards is compatible with the size of the USB connector as standardized.

According to a preferred feature, communications of the flash memory card read/write module are restricted to the ones with the functional module.

This preferred feature enables no external communication to be established by the flash memory card insuring a protected environment.

According to advantageous feature, said functional module applies limited access to the flash memory card.

Such application of limited access, typically associated with a access right management policy, enables to enhance the security offered by the dongle.

According to a particular configuration, said functional module communicates with portions only of the flash memory card.

Such a configuration enables to define secure zones on the flash memory card and to have a better control on the security. The invention thus enables a SD card, or partitions of a SD card, to be exclusively used by the software protection device as secure external memory.

According to a particular implementation, said flash memory card having a identifier, said functional module includes instructions to check this identifier before giving any access to the flash memory card.

This implementation enables the USB software protection device to track the serial number of a connected SD card. It is thus possible to blacklist contents of SD cards, e.g. licenses, if a newer SD card with licensing content was being connected.

According to a particular implementation, a virtual state of the functional module is stored on the flash memory card.

This enables to update the dongle itself in case of need by swap of the virtual state of the functional module out of the flash memory card.

The present invention also relates to a USB connector dedicated to be integrated in a USB device according to the invention, for the flash memory card read/write module and/or the functional module to be in data communication with an external electronic device connected thereto, said USB connector having a conductive shell and a thinned contact support plate to arrange a flash memory card slot inside the conductive shell for holding a flash memory card in connection with the flash memory card read/write module of the USB device.

According to a preferred embodiment, the conductive shell of said USB connector is a metal shell and has a lateral seam.

To the accomplishment of the foregoing and related ends, one or more embodiments comprise the features hereinafter fully described and particularly pointed out in the claims.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figures 1A and AB show a USB device of the present invention;
- Figure 2 shows a microSD card and a USB device of the invention in a split perspective view;
- Figure 3 shows an advantageous implementation for a seam of the invention;
- Figure 4 schematically shows an internal structure of a USB device of the invention.

### DETAILED DESCRIPTION OF EMBODIMENTS OF THE INVENTION

The detailed description will illustrate and describe what is considered as a preferred embodiment of the invention. It should of course be understood that various modifications and changes in form or detail could readily be made without departing from the spirit of the invention. It is therefore intended that the invention may not be limited to the exact form and detail shown and described herein, nor to anything less than the whole of the invention disclosed herein and as claimed hereinafter. The same elements have been designated with the same reference numerals in the different drawings. For clarity, only those elements and steps which are useful to the understanding of the present invention have been shown in the drawings and will be described.

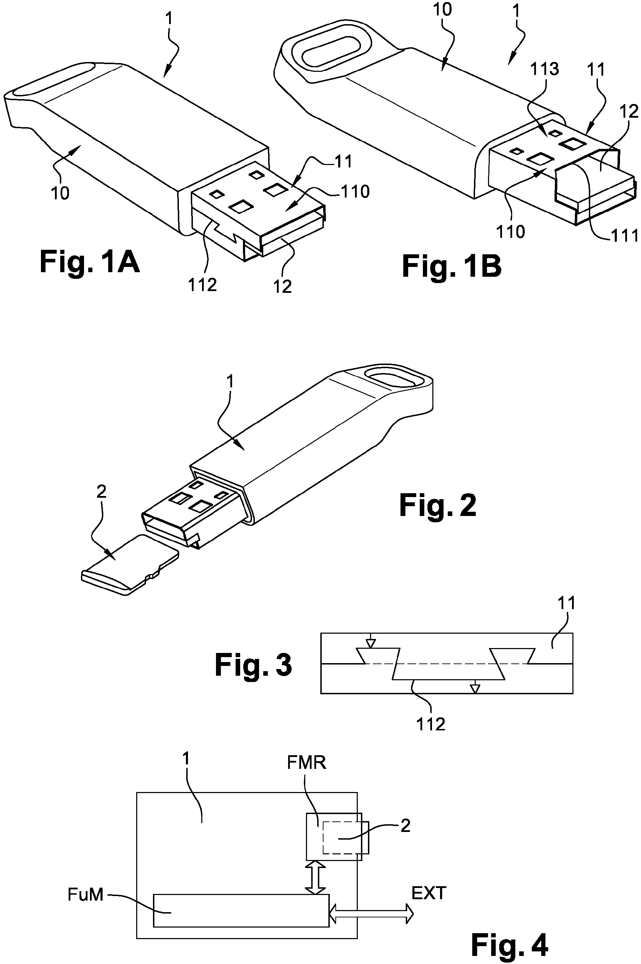

Figure 1A and AB shows two views in perspective of a USB device 1 of the invention. This USB device comprises a body 10 and a connector 11. The connector 11 is classically formed of a metal shell 110 forming a conductive shell. This shell 110 has here a cutout 111 arranged on the top side of the card slot, e.g. on the top side of the dongle as shown on figure 1B. According to the invention, this metal shell 110 is formed from a rectangle folded sheet of metal. The two extreme ridges being seamed together in a lateral seam 112 visible only on figure 1A.

The connector of the USB device 1 further comprises a contact support plate 12 supporting the pads/contact enabling connections according to USB standard.

According to the invention, as shown on figure 1B, the contact support plate 12 is thinned in order to open a slot between the top side of the metal shell 11 and the contact support plate 12. This slot is thick enough to receive a flash memory card having a compliant size. Currently such compliant cards are typically microSD cards.

The cutout 111 in the metal shell helps for the extraction of the SD card to be done with the finger or fingernail by a user.

The seam 112 is realized according to a trapezoidal section enabling a good robustness of the seam once the metal shell in engaged in the body during the manufacturing of the USB device. It also offers an easy assembly of the connector metal shell 11.

According to a preferred embodiment of the invention, the metal shell 12 is further provided with a punch 113 to increase locally and punctually the friction of the flash memory card inside the slot. It avoids the card to slide outside the slot while not disturb the easiness, for a user, to extract the card.

Other features can be applied on the metal shell such as standardized holes etc.

Figure 2 shows a microSD card 2 and a USB device of the invention 1 in a split perspective view.

Figure 3 shows a lateral side of the metal shell 11 carrying an advantageous example for a seam of the invention. The seam is advantageously centered on the lateral side. On the figure, the middle of the lateral side is thus illustrated by a dashed line. The seam is advantageously realized along a line having three successive dovetails. In the preferred embodiment represented on figure 3, the central dovetail is larger than the two others and extends symmetrically to the two other ones relative to the central dashed line. The two arrows thus designate two substantially equal lengths.

Figure 4 schematically shows an internal structure of a USB device 1 of the invention. It comprises a functional module FuM and a flash memory reader FMR in which a flash memory card 2 is inserted. Arrows are showing the communications according to a preferred implementation of the invention. In the preferred implementation, communications of the flash memory card reader are strictly limited to the ones with the functional module of the dongle. Other communications are prohibited. This preferred embodiment assures that no direct external contact can be established for the flash memory card. Communications with the flash memory card are only performed through the functional module and they can thus be satisfactorily protected. Only the functional module FuM is able to establish communications with external electronic device EXT.

Access right management can be implemented by the functional module having typically a microprocessor. The microprocessor of the software protection device limits the access to the SD card or to portions of the SD cards.

This enables to store protected software on a SD card reducing delivery to only one device. The protected software can also be customized to the end-users needs in several ways.

The invention also enables to store licenses on a SD card, overcoming the memory limits of the dongle. The licenses can also contain larger portions of virtual machine code.

The invention also enables data on a SD card, used by the protected software, to be encrypted utilizing the cryptographic features of the software protection device.

Also access to a SD card or parts of a SD card, even to certain files, can be controlled by licenses applied to the software protection device, giving access to them to the protected software and/or the connected computer.

Notwithstanding the fact that the elements of a claim are set forth below in a certain combination, it must be expressly understood that the invention includes other combinations of fewer, more or different elements, which are disclosed in above even when not initially claimed in such combinations. A teaching that two elements are combined in a claimed combination is further to be understood as also allowing for a claimed combination in which the two elements are not combined with each other, but may be used alone or combined in other combinations. The excision of any disclosed element of the invention is explicitly contemplated as within the scope of the invention.

Although elements may be described above as acting in certain combinations and even initially claimed as such, it is to be expressly understood that one or more elements from a claimed combination can in some cases be excised from the combination and that the claimed combination may be directed to a sub-combination or variation of a sub-combination.

In the above detailed description, reference is made to the accompanying drawings that show, by way of illustration, specific embodiments in which the invention may be practiced. These embodiments are described in sufficient detail to enable those skilled in the art to practice the invention. The above detailed description is not to be taken in a limiting sense, and the scope of the present invention is defined only by the appended claims, appropriately interpreted, along with the full range of equivalents to which the claims are entitled.

## Claims

1. A universal serial bus (USB) device (1) comprising:
- a flash memory card read/write module (FMR);
- a functional module (FuM);
- a USB connector (11) through which the flash memory card read/write module (FMR) and/or the functional module (FuM) is in data communication with an external electronic device (EXT) connected thereto, said USB connector (11) having a conductive shell (110) and a thinned contact support plate (12) to arrange a flash memory card slot inside the conductive shell (110) for holding a flash memory card (2) in connection with the flash memory card read/write module (FMR), said flash memory card read/write module (FMR) and said functional module (FuM) being further arranged for the functional module (FuM) to communicate with a flash memory card (2) inserted in the flash memory card slot.

2. A USB device (1) according to claim 1, wherein said functional module (FuM) stores a software protection software having instructions dedicated to said flash memory card read/write module (FMR) to use a flash memory card (2) held in the flash memory card slot.

3. A USB device (1) according to claim 1 or 2, wherein the conductive shell (110) of said USB connector (11) is a metal shell and has a lateral seam (112).

4. A USB device (1) according to one of preceding claims, wherein said conductive shell (110) has further a cutout (111) arranged at the top side of the flash memory card slot.

5. A USB device (1) according one of preceding claims, wherein the conductive shell (110) further has a punch (113) at the top side of the flash memory card slot.

6. A USB device (1) according to one of preceding claims, wherein said flash memory card (2) is a microSD card.

7. A USB device (1) according to one of the preceding claims, wherein communications of the flash memory card read/write module (FMR) are restricted to the ones with the functional module (FuM).

8. A USB device (1) according to one of preceding claims, wherein said functional module (FuM) applies limited access to the flash memory card (2).

9. A USB device (1) according to one of preceding claims, wherein said functional module (FuM) communicates with portions only of the flash memory card (2).

10. A USB device (1) according to one of preceding claims, wherein, said flash memory card (2) having an identifier, said functional module (FuM) includes instructions to check this identifier before giving any access to the flash memory card (2).

11. A USB device according to one of preceding claims, wherein a virtual state of the functional module (FuM) is stored on the flash memory card (2).

12. A USB connector (11) dedicated to be integrated in a USB device (1) according to one of the preceding claims, for the flash memory card read/write module (FMR) and/or the functional module (FuM) to be in data communication with an external electronic device (EXT) connected thereto, said USB connector (11) having a conductive shell (110) and a thinned contact support plate (12) to arrange a flash memory card slot inside the conductive shell (110) for holding a flash memory card (2) in connection with the flash memory card read/write module (FMR) of the USB device (1).

13. A USB connector (11) according to claim 12, wherein the conductive shell (110) of said USB connector (11) is a metal shell and has a lateral seam (112).
